Europäisches Patentamt

European Patent Office

Office européen des brevets

(19)

(11) Numéro de publication : **0 452 181 A1**

(12)

# DEMANDE DE BREVET EUROPEEN

(21) Numéro de dépôt : **91400824.8**

(22) Date de dépôt : **27.03.91**

(51) Int. Cl.⁵ : **B01D 19/00, F16N 39/00, B04C 3/06**

(30) Priorité : **28.03.90 FR 9003936**

(43) Date de publication de la demande :
**16.10.91 Bulletin 91/42**

(84) Etats contractants désignés :
**DE ES FR GB IT**

(71) Demandeur : **HISPANO-SUIZA Société
anonyme dite:
333, Bureaux de la Colline
F-92213 Saint Cloud (FR)**

(72) Inventeur : **Ville, Daniel, Victor, Marcel
2, rue A. de Musset
F-92360 - Meudon La Foret (FR)**
Inventeur : **Vives, Jean-Paul
3, avenue Kennedy
F-95210 - Saint Gratien (FR)**

(74) Mandataire : **Moinat, François et al
S.N.E.C.M.A. Service des Brevets Boîte
Postale 81
F-91003 Evry Cédex (FR)**

(54) **Systéme désaérateur d'huile.**

(57)    Dispositif désaérateur d'huile du genre constitué d'une cavité cylindrique (3) comportant un canal tangentiel (4) d'introduction d'huile sous pression, des canaux tangentiels d'évacuation (6) de l'huile désaérée et un canal axial (7) d'évacuation de l'air.

Le canal d'introduction (4) est situé à la partie inférieure de la cavité cylindrique (3) tandis que les canaux tangentiels (6) d'évacuation d'huile et le canal axial (7) d'évacuation d'air sont situés à la partie supérieure.

Ce dispositif fonctionnant suivant le principe du Vortex permet de désaérer l'huile des moteurs d'avions dans toutes les configurations de vol.

FIG : 1

EP 0 452 181 A1

La présente invention a pour objet un désaérateur d'huile, c'est à dire un dispositif capable d'éliminer les bulles d'air entraînées par de l'huile dans un circuit de lubrification.

Ce problème de la désaération de l'huile se pose, dans l'exploitation de machines, de turbomachines aéronautiques notamment. En effet, lorsque l'huile de lubrification est utilisée au niveau des paliers, elle se charge de bulles d'air, et les pompes de récupération renvoient, dans le réservoir d'huile, un mélange air/huile dans un rapport qui peut atteindre environ 4/1. Il est bien entendu que, dans ces conditions, l'huile disponible dans le réservoir, perd une bonne partie de ses propriétés de lubrification. C'est pourquoi on a déjà proposé d'installer sur les circuits de retour d'huile, des dispositifs séparateur d'huile et d'air. Notamment on connait déja des dispositifs séparateurs dans lesquels le mélange d'huile et d'air qui arrive est centrifugé par des pièces tournantes, des aubes par exemple, contre une paroi annulaire ou l'huile est récupéré alors que l'air est évacué à la partie centrale. Dans le cas des installations aéronautiques, ces dispositifs relativement compliqués doivent être entraînés soit à partir de la prise de mouvement pour l'entrainement des accessoires, soit directement par l'arbre principal de la turbomachine. Ceci constitue une servitude importante. On connait également des dispositifs, destinés à réaliser la séparation de fluides a poids spécifiques différents, dans lesquels l'écoulement est dévié dans un conduit coudé et partiellement introduit dans une chambre de Vortex ou chambre à tourbillons, qui est tangente à l'écoulement principal et est en contact immédiat avec celui-ci dans la zone de courbure intérieure du conduit, ce qui crée un champ de forces centrifuges dans la chambre à tourbillons, hors duquel la composante à poids spécifique plus léger est aspirée par un tube qui fait saillie coaxialement dans la chambre. Si de tels dispositifs peuvent donner satisfaction dans des installations industrielles au sol, il n'en est pas de même en aéronautique, notamment à bord d'un avion susceptible de voler en position dite de "vol dos".

C'est pourquoi la présente invention propose un désaérateur capable de remédier aux inconvénients des séparateurs antérieurs.

La présente invention a pour objet un désaérateur d'huile du genre constitué d'une cavité cylindrique, ou chambre de Vortex, comportant un canal tangentiel d'introduction sous pression de l'huile chargée de bulles d'air, des canaux tangentiels d'évacuation de l'huile désaérée et un canal axial d'évacuation d'air.

Cette invention se caractérise en ce que, le canal tangentiel d'introduction d'huile est situé à la partie inférieure de la cavité cylindrique tandis que les canaux tangentiels d'évacuation d'huile et le canal axial d'évacuation d'air sont situés à la partie supérieure.

Selon une forme de réalisation préférée, ladite cavité cylindrique est disposée à l'intérieur et à la partie supérieure du réservoir d'huile, au dessus du niveau normal de celle-ci.

Le canal axial d'évacuation d'air plonge avantageusement, jusqu'à mi-hauteur, dans la partie centrale de la cavité.

Enfin, les canaux tangentiels d'évacuation sont, de préférence, au moins au nombre de deux régulièrement répartis à la périphérie de la cavité et ont une section totale au moins égale à la section du canal d'introduction.

L'invention sera mieux comprise à la lecture de la description qui va suivre, en regard des dessins annexés, donnée à titre d'exemple non limitatif.

La figure 1 représente un dispositif conforme à l'invention en position de vol normal.

La figure 2 représente, à plus grande échelle, en vue de dessus le dispositif désaérateur de la figure 1.

La figure 3 représente le même dispositif que la figure 1 mais en position dite de vol dos.

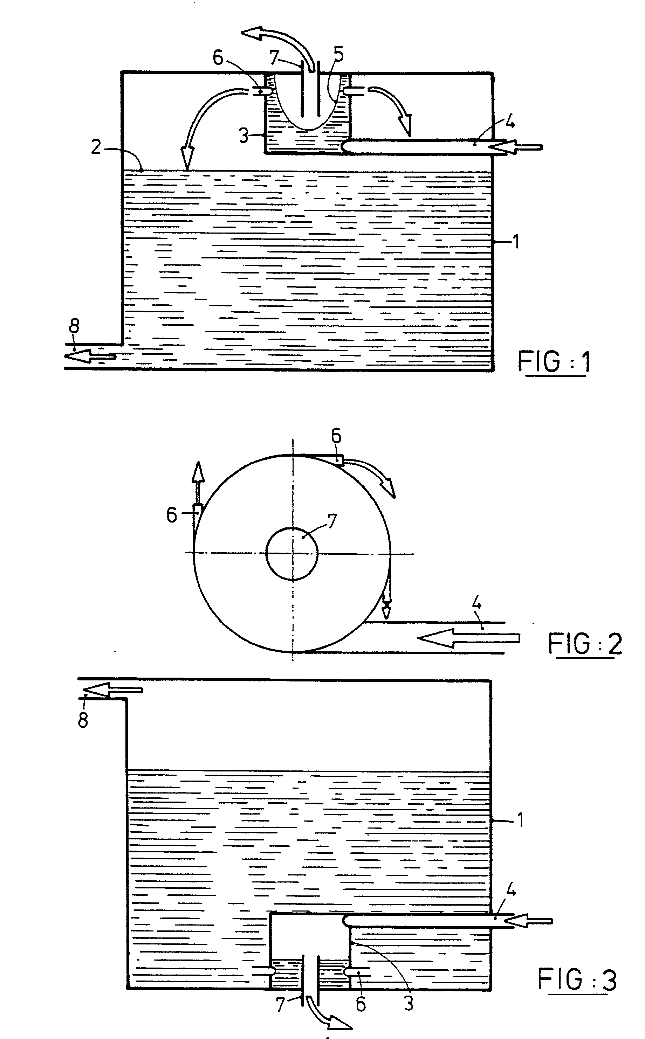

Le désaréateur représenté à la figure 1 est placé, conformément à l'invention, à la partie supérieure d'un réservoir d'huile 1, au dessus du niveau 2 normal de l'huile. Ce désaérateur est constitué d'une cavité cylindrique 3 qui reçoit, à sa partie inférieure, au moyen d'un canal tangentiel 4 d'alimentation, l'huile chargée de bulles d'air que refoulent les pompes de récupération. L'arrivée tangentielle dans la chambre à Vortex provoque, par centrifugation, une répartition périphérique de l'huile avec une surface de séparation interne 5 en forme de paraboloïde au centre duquel sont refoulées les bulles d'air. L'évacuation de l'huile s'effectue par des canaux tangentiels d'évacuation 6 placés à la partie supérieure de la cavité 3. Ces canaux 6 permettent à l'huile qui remonte le long des parois de la cavité 3 de retomber dans le réservoir 1. Un canal axial 7 qui plonge jusque dans la partie centrale de la cavité 2 assure l'évacuation de l'air pour éviter la montée en pression du réservoir.

A la base du réservoir 1 se trouve, de façon habituelle, un conduit d'aspiration 8 relié aux pompes de lubrification.

La figure 2 montre, en vue de dessus et à plus grande échelle, la cavité cylindrique 3 de la figure 1.

Sur cette figure on voit notamment les canaux tangentiels d'évacuation 6 qui, dans l'exemple représenté sont au nombre de trois.

La figure 3 permet de mieux comprendre le fonctionnement en position dite de vol dos. Dans cette position, le réservoir 1 étant retourné, le circuit de lubrification est provisoirement parcouru par de l'air refoulé en 4 par les pompes de récupération. Cet air peut être évacué par le canal 7 sans que l'huile s'écoule, le niveau de celle-ci dans la cavité 3 étant inférieur au débouché dudit canal d'évacuation d'air 7.

Le dispositif désaérateur de l'invention est donc bien un dispositif simple sans aucun entretien, qui permet, d'une part, de désaérer l'huile retournant au réservoir pour la renvoyer dans le circuit de lubrification et, d'autre part, d'assurer l'évacuation d'air du réservoir y compris en "vol dos" pour éviter de le gonfler jusqu'à l'éclatement.

**Revendications**

1. Dispositif désaérateur d'huile constitué d'une cavité cylindrique comportant un canal tangentiel d'introduction sous pression de l'huile chargé de bulles d'air, des canaux tangentiels d'évacuation de l'huile désaérée et un canal axial d'évacuation d'air, caractérisé en ce que, le canal tangentiel d'introduction (4) d'huile est situé à la partie inférieure de la cavité cylindrique (3) tandis que les canaux tangentiels (6) d'évacuation d'huile et le canal axial (7) d'évacuation d'air sont situés à la partie supérieure, et en ce qu'il est disposé à l'intérieur et à la partie supérieure d'un réservoir d'huile (1) au dessus du niveau normal (2) de celle-ci.

2. Dispositif désaérateur d'huile selon la revendication 1, caractérisé en ce que le canal axial d'évacuation d'air (7) plonge, jusqu'à mi-hauteur, dans la partie centrale de la cavité (3).

3. Dispositif désaérateur d'huile selon l'une des revendications 1 ou 2, caractérisé en ce que les canaux tangentiels d'évacuation (6) sont au moins au nombre de deux régulièrement répartis à la périphérie de la cavité (3) et ont une section totale au moins égale à la section du canal d'introduction (4).

EP 0 452 181 A1

FIG :1

FIG :2

FIG :3